# EUROPEAN PATENT APPLICATION

(11) **EP 2 375 217 A2**
(43) Date of publication of application: **12.10.2011**
(21) Application number: 11160530.9
(22) Date of filing: 30.03.2011
(51) Int. Cl.: G01B 11/24, G01B 21/04, G01M 11/02

(54) **Aspheric surface measuring apparatus**

(30) Priority: 31.03.2010 JP 2010083869
(71) Applicant: Fujifilm Corporation, Minato-ku Tokyo (JP)
(72) Inventor: Tomimizu, Masaaki, Saitama (JP); Ge, Zongtao, Saitama (JP); Iwazaki, Hiroyuki, Saitama (JP)
(74) Representative: Klunker . Schmitt-Nilson . Hirsch

(57) **Abstract**

An aspheric surface measuring apparatus (1) includes a sample holder mechanism (6, 7, 70) and an interferential optical mechanism (2, 3, 4, 8, 80), and performs optical interferometric measurement while rotating a sample (10) every time a measurement angle is varied. The sample holder mechanism has a first air spindle (70) for rotating the sample about a test surface axis and a first airslide (7) . The first airslide carries the sample orthogonally or parallel to the test surface axis. The interference optical mechanism has an interference optical system (2), a first imaging system (3), and a second imaging system (4), a second air spindle (80), and a second airslide (8). The second spindle revolves or turns the interference optical system and the first and second imaging systems integrally to change a measurement angle between the measurement optical axis and the test surface axis. The second airslide carries the second air spindle orthogonally to the moving direction of the first airslide.

## Description

### FIELD OF THE INVENTION

The present invention relates to an aspheric surface measuring apparatus for emitting measurement beams to an aspheric test surface and measuring a shape of the aspheric test surface based on interference fringes caused by interference between the measurement beams reflected from the aspheric test surface and reference beams.

### BACKGROUND OF THE INVENTION

A conventional method for identifying a local shape of an aspheric test surface is known. In this method, spherical waves are emitted to the aspheric test surface and then the local shape of the aspheric test surface is identified based on interference fringes caused by interference between beams reflected from the aspheric test surface and reference beams. It is difficult, however, to obtain interference fringes covering an entire aspheric test surface using this method.

To solve the above problem, a method to identify a shape of an entire aspheric test surface is known (see Japanese Patent Laid-Open Publication No. 62-126305). In this method, an interferometer or the aspheric test surface is moved successively in a measurement optical axis direction to successively generate interference fringes corresponding to each of partial areas into which the aspheric test surface is divided in a radial direction. The interference fringes are analyzed on a per partial area basis to obtain a shape of each partial area of the aspheric test surface. The shapes of the partial areas are stitched together to identify the shape of the entire aspheric test surface.

On the other hand, a method for successively moving an interferometer or an aspheric test surface in a plane orthogonal to a measurement optical axis is known (see U.S. Patent No. 6,956,657). In this method, interference fringes corresponding to each of partial areas of the aspheric test surface are magnified enough to be analyzed and then imaged every time the interferometer or the aspheric test surface is moved. The imaged interference fringes are analyzed on a per partial area basis to obtain a shape of each partial area of the aspheric test surface. The shapes of the partial areas are stitched together to identify the shape of the entire aspheric test surface.

Recently, shapes of aspheric lenses have become more and more complex. For example, an aspheric lens having both a convex surface (convex portion) and a concave surface (concave portion) about a center axis of an aspheric test surface comes into use. It has been difficult to measure the shape of the aspheric test surface having both the convex and concave portions, using optical interferometric measurement. Instead, three-dimensional shape measurement using an optical stylus has been performed.

In a general optical interferometric measurement method, appropriate or correct interference fringes are obtained only when an area of the aspheric test surface is capable of reflecting back the measurement beams emitted thereto, namely, only when the beams are reflected back from the area of the aspheric test surface to travel back along the path of incidence. A problem with the methods of the Japanese Patent Laid-Open Publication No. 62-126305 and the U.S. Patent No. 6,956,657 is that the measurement beams emitted to the aspheric test surface are spherical waves traveling along the measurement optical axis while being converged or diverged. In this case, however, directions of the beams reflected from the convex portion of the aspheric test surface and directions of the beams reflected from the concave portion of the aspheric test surface are completely different from each other. As a result, appropriate interference fringes cannot be obtained from either of the convex and concave portions.

On the other hand, an interferometer using plane waves as the measurement beams is generally known. In a complex aspheric test surface, however, due to large inclination differences between the partial areas of the aspheric test surface, fringe density of the interference fringes becomes extremely high even if the measurement is performed in each partial area while directions of the measurement beams emitted thereto are varied. As a result, resolution of a common two-dimensional image sensor is too low to perform the fringe analysis with high accuracy.

In view of the foregoing, as a result of a research, inventors of the present invention found out that the following method is effective for measuring the above-described aspheric shape having, for example, the convex and concave portions. In this method, a sample and an interference optical system are relatively movable in triaxial directions. The optical interferometric measurement is performed while the sample is rotated about its center axis. Further, the optical interferometric measurement is repeated while the angles between the center axis of the sample and the measurement optical axis of the interference optical system are varied sequentially and while the sample is rotated about its center axis. Interference fringes obtained are analyzed to measure the shape of each partial area of the aspheric test surface. The shapes of the partial areas are stitched together into the shape of the entire aspheric test surface. A problem with this method, however, is that it is difficult to perform the optical interferometric measurement with high accuracy in a short time without constraints on measurement conditions.

To be more specific, when a mechanism for rotating the sample about the center axis of the aspheric shape and a mechanism for varying angles between the center axis of the sample and the measurement optical axis of the interference optical system are incorporated in a mechanism for relatively moving the sample and the interference optical system in triaxial directions, it becomes difficult to ensure accuracy in micromovements due to inertial force increased with the weight of moving parts. As a result, movement accuracy, required for performing the shape measurement with high accuracy, cannot be obtained. In addition, the above-described aspheric surface measurement is inconvenient due to constraints on measurement conditions, a long measuring time, and the like.

### SUMMARY OF THE INVENTION

An object of the present invention is to provide an aspheric surface measuring apparatus capable of measuring a shape of an aspheric test surface with high accuracy and having a mechanism for relatively moving a sample holding device and an interference optical device.

In order to achieve the above and other objects, an aspheric surface measuring apparatus is configured as follows.

The aspheric surface measuring apparatus of the present invention includes the sample holding device and the interference optical device. The sample holding device holds a sample having an aspheric test surface. The interferential optical device has an interferential optical unit for emitting measurement beams to the aspheric test surface and obtaining interference fringes caused by interference of the measurement beams reflected from the aspheric test surface and reference beams to perform optical interferometric measurement. The aspheric surface measuring apparatus measures a shape of the aspheric test surface based on the interference fringes. The sample holding device includes a sample rotation mechanism and a first slide mechanism. The sample rotation mechanism rotates the sample about a test surface axis. The first slide mechanism supports and rectilinearly moves the sample rotation mechanism orthogonally or parallel to the test surface axis. The interferential optical device includes an optical unit revolution mechanism and a second slide mechanism. The optical unit revolution mechanism supports and revolves or turns the interferential optical unit to vary a measurement angle between a measurement optical axis of the interferential optical unit and the test surface axis. The second slide mechanism supports and rectilinearly moves the optical unit revolution mechanism orthogonal to a moving direction of the first slide mechanism. The aspheric surface measuring apparatus includes a controller for controlling the sample rotation mechanism, the first slide mechanism, the optical unit revolution mechanism, and the second slide mechanism. The optical interferometric measurement is performed while the sample is rotated and every time the measurement angle is varied sequentially under the control of the controller.

It is preferable that the sample holding device and the interferential optical device are disposed in a housing to prevent abrupt changes in temperature and humidity around the aspheric test surface.

It is preferable that each of the first and second slide mechanisms is composed of an airslide.

It is preferable that each of the sample rotation mechanism and the optical unit revolution mechanism is composed of an air spindle.

It is preferable that the optical unit revolution mechanism having the interferential optical unit is mounted on the middle of a base portion of the interferential optical device, and an end portion of the base portion is supported by a slide of the second slide mechanism, and the other end portion is held slidably above a table using an air bushing.

It is preferable that an up-and-down mechanism for adjusting positions of the test surface axis and the measurement optical axis in up-and-down direction is provided to at least one of the sample holding device and the interferential optical device.

It is preferable that the interferential optical unit is provided with a first imaging section for imaging the interference fringes using a one-dimensional image sensor and a second imaging section for imaging the interference fringes using a two-dimensional image sensor.

The test surface axis is a center axis of an aspheric shape in the aspheric test surface of the sample.

The aspheric surface measuring apparatus of the present invention has the following effects.

The controller controls the first and second slide mechanisms provided in different directions, the sample rotation mechanism, and the optical unit revolution mechanism to perform the optical interferometric measurement while the sample is rotated and every time the measurement angle is varied sequentially. Thereby, the first slide mechanism and the second slide mechanism are operated separately to reduce respective moving loads. As a result, movement accuracy and measurement accuracy are improved. Separately provided first and second slide mechanisms reduce the size of the aspheric surface measuring apparatus compared to the case where the first and second slide mechanisms are formed integrally. The separated structures also eliminate the need for rigid members used in an integrated or single-piece structure to improve accuracy. The separately provided first and second slide mechanisms ensure sufficient measurement accuracy with low-stiffness structures. Thus, the shape measurement of the micro-aspheric lens and the like is performed with high accuracy.

To measure the aspheric test surface, it is required to perform the optical interferometric measurement while the sample is rotated and at varied measurement angles between the measurement optical axis of the interferential optical unit and the test surface axis. The rotations in two different directions are performed by the sample rotation mechanism and the optical unit revolution mechanism, respectively. Thereby, the respective moving loads are reduced to ensure the movement accuracy and improve the measurement accuracy. Thus, the shape measurement of a micro-aspheric lens and the like is performed with high accuracy.

This invention provides non-contact measurement of the shape of the aspheric test surface, thereby preventing the aspheric test surface from being scratched by a stylus or the like. The present invention is particularly effective for measurements of samples with micro-aspheric shapes. The sample and the interferential optical unit are moved with high accuracy, thereby improving the measurement accuracy.

In the present invention, the sample holding device and the interferential optical device are disposed in the housing so as to prevent abrupt changes in temperature and humidity around the aspheric test surface. Thereby, a decline in the measurement accuracy caused by environmental changes is prevented.

Each of the first slide mechanism and the second slide mechanism of the present invention is composed of the airslide. Thereby, use of gas as a lubricating film eliminates occurrence of friction associated with use of a liquid or solid lubricating film. As a result, high movement accuracy and high measurement accuracy of the sample and the interferential optical unit are maintained for a long time.

Similarly, each of the sample rotation mechanism and the optical unit revolution mechanism of the present invention is composed of the air spindle, thereby eliminating friction associated with use of another type of spindle. As a result, high rotational accuracy of the sample and high accuracy in varying the measurement angles, that is, the high measurement accuracy is maintained for a long time.

In the present invention, the interferential optical unit is mounted on the middle of the base portion of the interferential optical device, and the end portion of the base portion is supported by the slide of the second mechanism, and the other end portion is held slidably above the table using the air bushing. Thereby, a difference between a weight applied to the slide and a weight applied to the air bushing becomes small, keeping a good load balance. As a result, high movement accuracy of the optical unit revolution mechanism, that is, high movement accuracy of the interferential optical unit is maintained.

In the present invention, the up-and-down mechanism for adjusting the positions of the test surface axis and the measurement optical axis in the up-and-down direction is provided to at least one of the sample holding device and the interferential optical device, thereby the sample holding position and the interferential optical unit are set to the initial measurement positions accurately and with simple configurations.

In the present invention, the interferential optical unit is composed of the first imaging section for imaging the interference fringes using the one-dimensional image sensor and the second imaging section for imaging the interference fringes using the two-dimensional image sensor, thereby the measurement of the aspheric test surface is performed in a short time and the initial measurement positions of the sample and the interferential optical unit are adjusted accurately. Particularly, when the one-dimensional image sensor with imaging speed faster than the two-dimensional image sensor is used in the optical interferometric measurement performed while the sample is rotated, the one-dimensional image sensor is capable of taking an image of the interference fringes at each of rotated positions of the aspheric test surface. As a result, the measurement time is shortened compared to the conventional method which requires to take an image for each partial area of the aspheric test surface in a stationary state.

According to the aspheric surface measuring apparatus of the present invention, the shape of the aspheric test surface is measured with high accuracy in a short time.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a perspective view of an aspheric surface measuring apparatus according to the present invention;
Figure 2 is a schematic front view of the aspheric surface measuring apparatus without a housing shown in Fig. 1;
Figure 3 is a plane view of the aspheric surface measuring apparatus without the table shown in Fig. 2;
Figure 4 is a plane view of an example of the aspheric surface measuring apparatus shown in Fig. 3 being moved;
Figure 5 is a structural diagram of an optical system and a control system of the aspheric surface measuring apparatus shown in Fig. 1; and
Figure 6 is a flowchart showing an example of measurement operation.

### DESCRIPTION OF THE PREFERRED EMBODIMENTS

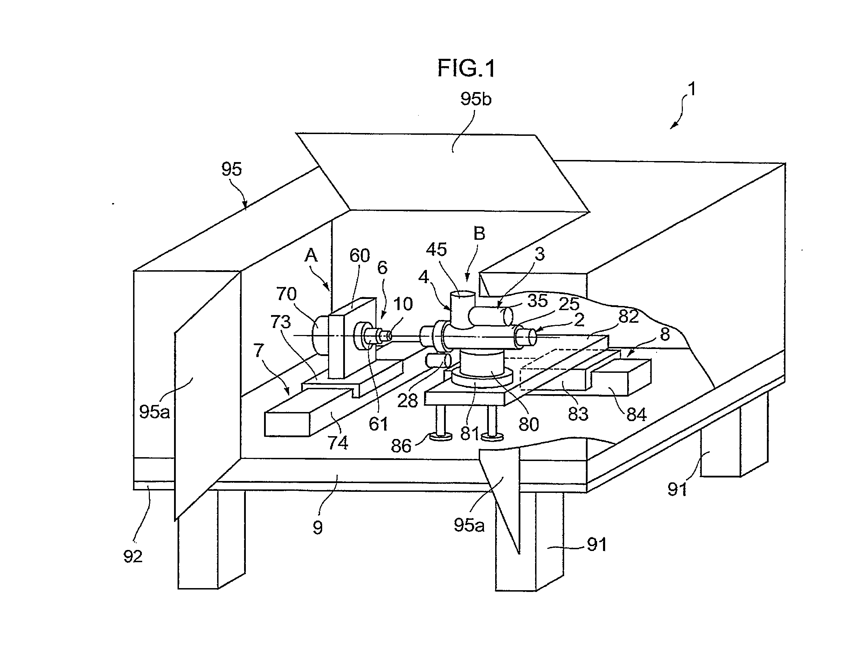

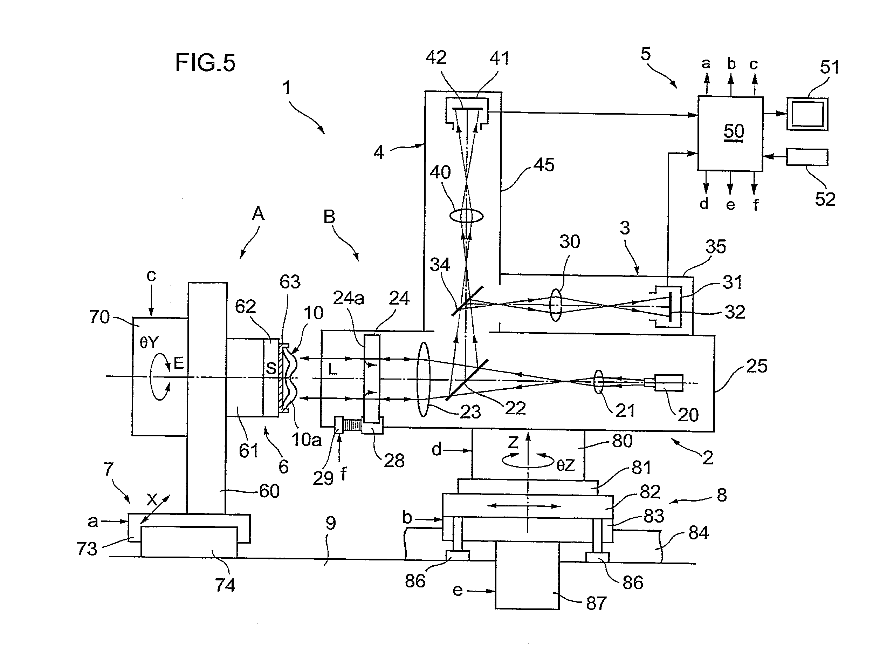

Hereinafter, referring to drawings, an embodiment of the present invention is detailed. Note that a structural diagram of Fig. 5 does not show accurate shapes and structures; the sizes of members and the distances between the members are changed from those illustrated in Figs. 1 to 4 as appropriate.

An aspheric surface measuring apparatus 1 of this embodiment shown in Figs. 1 to 5 measures and analyzes a shape of a rotationally symmetric aspheric test surface 10a (see Fig. 5) of a sample (aspheric lens) 10. The aspheric surface measuring apparatus 1 includes an interference optical system 2, a first imaging system 3, a second imaging system 4, a measurement analysis system 5 (see Fig. 5) and a sample stage 6. In the interference optical system 2, measurement beams are applied to the aspheric test surface 10a to combine the beams (hereinafter may referred to as reflected beams) reflected from the aspheric test surface 10a and reference beams into interfering beams. The first and second imaging systems 3 and 4 image interference fringes formed by the interfering beams. The measurement analysis system 5 (Fig. 5) analyses the imaged interference fringes to measure a shape of the aspheric test surface 10a. The sample stage 6 holds the sample 10 and allows manual adjustment of an orientation of the sample 10 being held.

The aspheric surface measuring apparatus 1 is composed of a sample holder mechanism A and an interferential optical mechanism B. The sample holder mechanism A includes the sample stage 6, a first air spindle 70, and a first airslide 7. After the orientation of the sample 10 is adjusted, the first air spindle 70 rotates the sample 10 about an axis S (hereinafter referred to as test surface axis S) of the aspheric test surface 10a. The first airslide 7 rectilinearly moves (slides) or carries the sample 10 in an X direction orthogonal to the test surface axis S. The interferential optical mechanism B includes the interference optical system 2, the first imaging system 3, the second imaging system 4, a second air spindle 80, and a second airslide 8. The second air spindle 80 revolves (or turns) the interference optical system 2, the first imaging system 3, and the second imaging system 4 integrally about a Z direction (vertical direction). The second airslide 8 rectilinearly moves (slides) or carries the interference optical system 2, the first imaging system 3, the second imaging system 4, and the second air spindle 80 in a Y direction (parallel to the test surface axis S) .

### <Sample holder mechanism A>

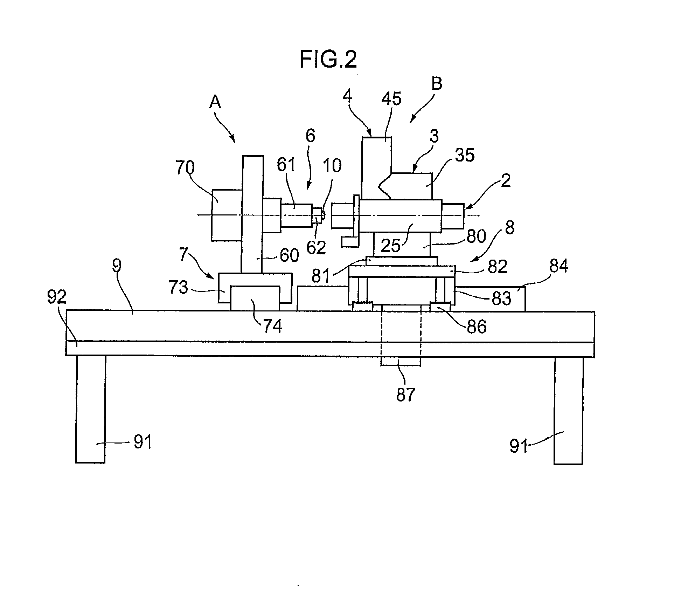

As shown in Figs. 2, 3, and 5, the sample stage 6 is provided with a base section 60 as a moving base, a manual adjustment section 61 attached to the base section 60, a rotation stage 62, and a sample holder 63. The rotation stage 62 is attached to the manual adjustment section 61 so as to adjust positions of a rotation axis E and the test surface axis S (See Fig. 5). The rotation stage 62 is rotatably held via the first air spindle 70. The sample holder 63 is attached to an end of the rotation stage 62. The sample holder 63 holds the sample 10.

The manual adjustment section 61 is configured such that the rotation center of the rotation stage 62, that is, the rotation center of the sample holder 63 is adjustable in the X and Z directions in its plane and such that the inclination of the rotation center is adjustable in θX and θZ directions. The manual adjustment section 61 also performs positional adjustment between the rotation center of the rotation stage 62 and a measurement optical axis L of the interference optical system 2. By the adjustment, the test surface axis S of the sample 10 is aligned with the rotation axis E of the manual adjustment section 61, and furthermore is aligned with the measurement optical axis L of the interference optical system 2 in an initial state (initial measurement position). Then, measurement is started.

The first air spindle 70 rotates the sample 10 held by the sample stage 6 during the measurement. To change or vary a measurement angle, the sample 10 is moved in the X direction using the first airslide 7. The first air spindle 70 and the manual adjustment section 61 are attached to the base section 60 coaxially with each other. Rotation driving force of the first air spindle 70 is transmitted to the rotation stage 62 to rotate the rotation stage 62 together with the sample 10 held by the sample stage 6.

The base section 60 is mounted on or supported by a slide 73 of the first airslide 7. The slide 73 is set on a slide guide 74 in a slidable manner. The slide guide 74 is placed on a table 9 (antivibration table) in the X direction. The first airslide 7 employs a static pressure gas bearing. Compressed air supplied to the slide 73 forms a gas film (lubricating film) in a clearance between the slide 73 and the slide guide 74 to float the slide 73 above the slide guide 74. A motor (not shown) drives the slide 73 to move or slide along the slide guide 74. An encoder (not shown) detects a position of the slide 73 and an analysis control device 50 controls the position of the slide 73 in the X direction.

The first air spindle 70 has a known structure (not shown) . A rotation axis of the first air spindle 70 is rotatably held in its housing via a gas film. To rotate the rotation axis, a servomotor (not shown) is provided thereto. The encoder (not shown) detects a rotation position (an amount of rotation) of the first air spindle 70, and the analysis control device 50 controls the rotation position of the first air spindle 70. <Interferential optical mechanism B >

As shown in Fig. 5, the interference optical system 2 has a Fizeau type optical system layout. The interference optical system 2 is provided with a light source 20, a beam expanding lens 21, a beam-splitting optical element 22, a collimator lens 23, a flat standard plate 24 and a barrel 25. The light source 20 outputs highly coherent beams. The beam expanding lens 21 expands a beam diameter of the beams outputted from the light source 20. The beam-splitting optical element 22 reflects the interfering beams upward in the drawing. The collimator lens 23 collimates the beams passed through the beam-splitting optical element 22. A part of plane waves from the collimator lens 23 is reflected back from a reference standard surface 24a, to be reference beams. The remaining plane waves pass through the reference standard surface 24a and travel as measurement beams along a measurement optical axis L. The barrel 25 incorporates the light source 20, the beam expanding lens 21, the beam-splitting optical element 22, the collimator lens 23, and the flat standard plate 24. The flat standard plate 24 is held by a fringe scan adaptor 28 that is provided with a piezo-element 29 such that the flat standard plate 24 slightly moves in the direction of the measurement optical axis L during fringe scanning measurement or the like.

The dimensions illustrated in Fig. 5 are exaggerated to facilitate understanding. Actually, the beam diameter of the measurement beams emitted to the aspheric test surface 10a is extremely small compared to an outer diameter of the aspheric test surface 10a. The measurement beams are emitted to a part of the aspheric test surface 10a. The aspheric test surface 10a is divided concentrically into ring-shaped measurement areas with different diameters.

The second imaging system 4 performs imaging mainly when the aspheric test surface 10a is in an initial orientation where the measurement optical axis L and the rotation axis E coincide with each other and the test surface axis S and the measurement optical axis L are parallel with each other. The second imaging system 4 is provided with an image-forming lens 40, an imaging camera 41, and a barrel 45. The image-forming lens 40 collects the interfering beams reflected upward in the drawing by the beam-splitting optical element 22 of the interference optical system 2 and passed through a beam-splitting optical element 34 that reflects a part of the interfering beams to the first imaging system 3. The imaging camera 41 has a two-dimensional image sensor 42 composed of an area CCD, a CMOS, or the like. The barrel 45 incorporates the image-forming lens 40 and the imaging camera 41. The second imaging system 4 obtains image data of the interference fringes formed on the two-dimensional image sensor 42 by the image-forming lens 40.

The first imaging system 3 performs imaging while the aspheric test surface 10a is rotated. The first imaging system 3 is composed of an image-forming lens 30, an imaging camera 31, and a barrel 35. The image-forming lens 30 collects interfering beams reflected by the beam-splitting optical element 34 and then traveling to the right in the drawing. The imaging camera 31 has a one-dimensional image sensor 32 composed of a line CCD, a CMOS, or the like. The barrel 35 incorporates the image-forming lens 30 and the imaging camera 31. The first imaging system 3 obtains image data of the interference fringes formed on the one-dimensional image sensor 32 by the image-forming lens 30.

The barrel 25 of the interference optical system 2 is placed in a horizontal direction (Y direction in an initial state or when the aspheric test surface 10a is in the initial orientation). Above the barrel 25, the barrel 45 of the second imaging system 4 is placed in a vertical direction (Z direction). The barrel 35 of the first imaging system 3 is placed parallel to the barrel 25. The barrels 25, 35, and 45 are fixed to each other and move integrally.

The second air spindle 80 revolves or turns the interference optical system 2, the first imaging system 3, and the second imaging system 4 integrally to change a measurement angle. At the same time or in addition, the second airslide 8 moves the interference optical system 2 (together with the first imaging system 3 and the second imaging system 4) in the Y direction. Namely, the barrel 25 of the interference optical system 2 is mounted on or supported by the top of the second air spindle 80. The second air spindle 80 is disposed vertically with the rotation axis extending in the Z direction. A retainer 81 supports the second air spindle 80. The rotation driving force of the second air spindle 80 is transmitted to the barrel 25 to revolve or turn (θZ) the interference optical system 2, the first imaging system 3, and the second imaging system 4 integrally about the Z axis.

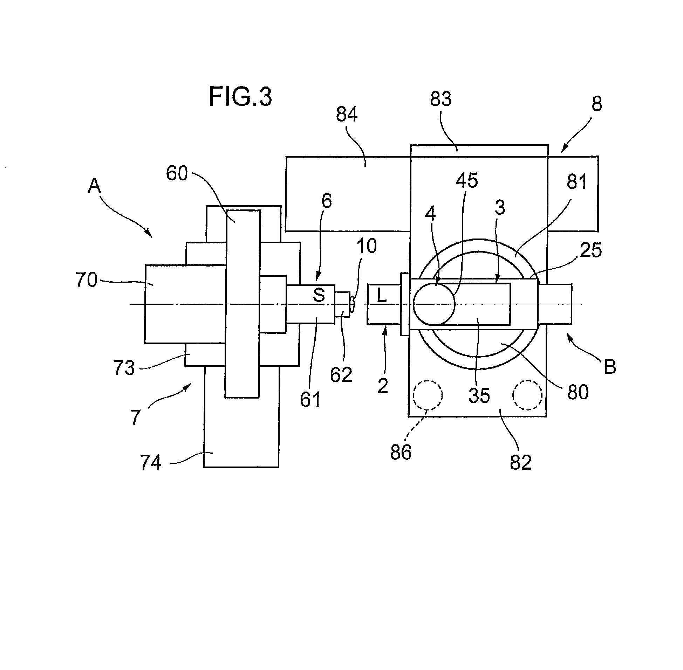

The retainer 81 is mounted in the middle (see Fig. 3) of a base section 82 of the second airslide 8. An upper or farther end of the base section 82 (in Fig. 3) is supported by a slide 83 of the second airslide 8, to be moved or carried by the slide 83. The slide 83 is set on a slide guide 84 in a slidable manner. The slide guide 84 is placed on the table 9 (antivibration table) in the Y direction (a direction orthogonal to the moving direction of the first airslide 7) . The other end of the base section 82 in Fig. 3 is kept horizontally at a predetermined height with the use of an air bushing 86. Compressed air supplied to the air bushing 86 allows the base section 82 to float over the table 9 via a gas film (lubricating film) to slide the base section 82 over the table 9 with low friction.

As with the first airslide 7, compressed air supplied to the slide 83 forms a gas film (lubricating film) in a clearance between the slide 83 and the slide guide 84 to float the slide 83 above the slide guide 84. A motor (not shown) drives the slide 83 to move or slide along the slide guide 84. An encoder (not shown) detects a position of the slide 83, and the analysis control device 50 controls the position of the slide 83 in the X direction.

As with the first air spindle 70, the second air spindle 80 has a known structure (not shown). A rotation axis of the second air spindle 80 is rotatably held in its housing via a gas film (lubricating film). To rotate the rotation axis, a servomotor (not shown) is provided thereto. The encoder (not shown) detects a rotation position (an amount of rotation) of the second air spindle 80, and the analysis control device 50 controls the rotation position. A portion of the second air spindle 80 which supports the barrel 25 of the interference optical system 2 is movable in up-and-down direction relative to the base section 82 and the slide 83. An up-and-down actuator 87 provided below drives the second air spindle 80 to move in the up-and-down direction. An encoder detects the up-and-down movement of the second air spindle 80, and the analysis control device 50 controls the position of the second air spindle 80 in the Z direction.

By operating the sample holder mechanism A and the interferential optical mechanism B, the relative orientation (an inclination angle and a position in X, Y, and X directions) of the aspheric test surface 10a is adjustable with respect to the measurement optical axis L of the interference optical system 2.

As shown in Fig. 1, the sample holder mechanism A and the interferential optical mechanism B are placed on the table 9. The table 9 is mounted on an antivibration table 92 placed on or supported by support legs 91. The sample holder mechanism A and the interferential optical mechanism B are covered with a housing 95 to prevent reduction in measurement accuracy caused by abrupt changes in temperature and humidity around the sample during the measurement. The housing 95 is provided with a front door 95a and a top door 95b. Opening the front door 95a and the top door 95b allows an operator to attach or detach the sample 10, for example.

In the interferential optical mechanism B, an up-and-down actuator 87 extends downward from the table 9. In this case, a long hole (not shown) is formed through the table 9 to move the up-and-down actuator 87 across the table 9, allowing the interference optical system 2 and first and second imaging systems 3 and 4 to move integrally in the Y direction.

### <Measurement analysis system 5>

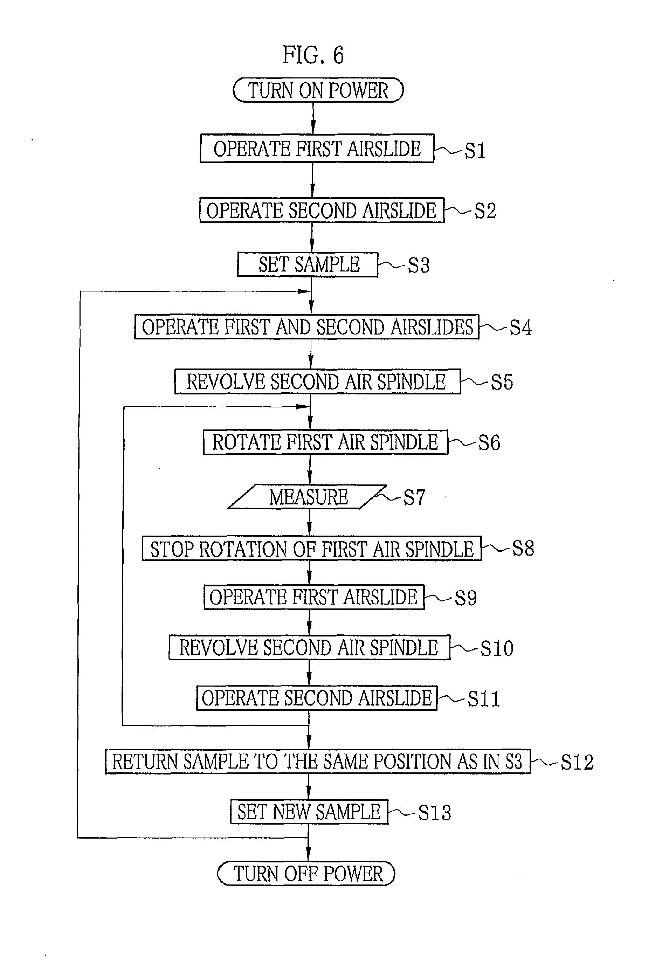

The measurement analysis system 5 receives a signal of the image data obtained by the one-dimensional image sensor 32 and a signal of the image data obtained by the two-dimensional image sensor 42. Based on the image data obtained, arithmetic analyses of shape data of the aspheric test surface 10a and eccentricity or deviation of the aspheric test surface 10a are performed. To control the measuring operation based on Fig. 6, the measurement analysis system 5 outputs drive signals "a" to "f" (see Fig. 5) to the first airslide 7 and the first air spindle 70 of the sample holder mechanism A, and the second airslide 8, the second air spindle 80, the up-and-down actuator 87, and the piezo element 29 of the interferential optical mechanism B to control each of the above-described members. The measurement analysis system 5 is composed of the analysis control device 50, a display device 51, and an input device 52. The analysis control device 50 is composed of a computer or the like. The display device 51 displays an analysis result and/or an image obtained from the analysis control device 50. The input device 52 is composed of a keyboard, a mouse, and the like.

The sample 10 has the aspheric test surface 10a that is rotationally symmetric about the test surface axis S. The aspheric test surface 10a has, on the interference optical system 2 side, a convex portion having a convex surface, a concave portion having a concave surface, and a stationary point portion or boundary portion located on a border or in an area between the convex and concave portions. In accordance with the shapes of the above portions and based on design data of the aspheric test surface 10a, the aspheric test surface 10a is divided concentrically into the ring-shaped measurement areas with different diameters.

When the aspheric test surface 10a is in the initial orientation, the manual adjustment section 61 is manually adjusted such that the measurement optical axis L coincides with the test surface axis S based on an image of the interference fringes imaged by the two-dimensional image sensor 42 of the second imaging system 4.

The analysis control device 50 controls the drive of the first airslide 7, the second airslide 8, the first air spindle 70, the second air spindle 80, and the up-and-down actuator 87, without interference with one another, to vary the relative orientation of the measurement optical axis L with respect to the aspheric test surface 10a such that a position of an intersection of the measurement optical axis L and the aspheric test surface 10a is moved onto each of the divided measurement areas sequentially, and such that the measurement optical axis L is orthogonal to a tangent plane of the aspheric test surface 10a at the intersection. The one-dimensional image sensor 32 of the first imaging system 3 takes images of the interference fringes for each of the divided measurement areas while the aspheric test surface 10a is rotated by the first air spindle 70. Based on data of the taken interference fringes of each of the divided measurement areas, and data of the orientation and the rotation angle of the aspheric test surface 10a at the time the image of the interference fringes is taken, the analysis control device 50 obtains information about the shape of each of the divided measurement areas. The obtained information about the shapes of the divided measurement areas is stitched together to combine the divided measurement areas together. Thus, the information about the shape of the entire aspheric test surface is obtained.

Next, referring to Fig. 6, measurement steps of the aspheric surface measuring apparatus 1 according to this embodiment is described.

First, after the power is turned on, an initial moving operation is performed to set the sample 10. In a step S1, the first airslide 7, located on the left side in Fig. 1, for example, is operated to move the slide 73 so as to place the sample stage 6 in the close vicinity of the operator. Thereby, it becomes easy to set the sample 10 onto the sample stage 6. Then, the second airslide 8 is operated to move the slide 83 so as to move the interference optical system 2 away from the sample stage 6, namely, to the right in the drawing. Thus, the operator's work space is increased such that the interference optical system 2 does not interfere with the setting of the sample 10 onto the sample stage 6 (a step S2).

Then, the operator opens the front door 95a and the top door 95b of the housing 95 to set the sample 10 manually onto the sample holder 63 at the front end of the rotation stage 62. To be more specific, the operator takes the sample 10 (an aspheric lens or the like) out of storage and brings the sample 10 to the sample holder 63, and then sets the sample 10 onto the sample holder 63 in a predetermined orientation (a step S3). Thereinafter, the front door 95a and the top door 95b of the housing 95 are closed. The operator waits for a predetermined time until the atmosphere (temperature and humidity) inside the housing 95 becomes stable, and then starts the measurement.

Next, in a step S4, the first airslide 7 and the second airslide 8 are operated. The interference optical system 2 and the aspheric test surface 10a of the sample 10 are moved to positions (initial measurement positions) where the interference optical system 2 and the aspheric test surface 10a directly oppose each other. Namely, the slide 73 of the first airslide 7 is moved backward along the slide guide 74 to move the aspheric test surface 10a to its initial measurement position. The slide 83 of the second airslide 8 is moved along the slide guide 84 to its initial position where an emission end of the interference optical system 2 is brought closer to the sample 10 and the test surface axis S (rotational axis E) coincides with the measurement optical axis L.

In an initial setting (setup adjustment) of the aspheric surface measuring apparatus 1, a center position (X position, Z position), an angle (θX, θZ), or the like of the rotation stage 62 is manually adjusted relative to the rotation axis E of the first air spindle 70 with the use of the manual adjustment section 61 such that the center position of the rotation stage 62 coincides with a center position of the sample holder 63, that is, the test surface axis S of the sample 10. The above adjustment can be performed after the test surface axis S is determined using the optical interferometric measurement with image data (interference fringes), taken by the two-dimensional image sensor 42, of interfering beams formed by the reflected beams from the center portion of the sample 10 held by the sample holder 63.

In a step S5, the second air spindle 80 is revolved to adjust an measurement angle (an angle between the test surface axis S and the measurement optical axis L) of the interference optical system 2 to a predetermined angle. If the measurement angle is 0° and the test surface axis S and the measurement optical axis L are in directly opposing positions or in line with each other, this angle adjustment is unnecessary.

Next, the first air spindle 70 is driven to rotate the sample 10 to allow measurement of the aspheric test surface 10a (a step S6) , and then the optical interferometric measurement is performed (a step S7). In the optical interferometric measurement, the measurement beams from the light source 20 pass through the flat standard plate 24 to be emitted to the aspheric test surface 10a. Each of the one-dimensional image sensor 32 and the two-dimensional image sensor 42 obtains image data, that is, the interference fringes of the interfering beams formed by the interference of the beams reflected from the aspheric test surface 10a and the reference beams from the reference standard surface 24a of the flat standard plate 24. The interference fringes carry information about the shape of the aspheric test surface 10a. The image data is processed and analyzed to calculate measurement data of the aspheric shape. The calculated measurement data is displayed on the display device 51 and stored. Alternatively, to perform fringe scanning measurement, the fringe scan adaptor 28 is used to properly change a position of the flat standard plate 24 in the measurement optical axis (L) direction. The fringe scanning measurement is performed every time the position of the flat standard plate 24 is changed.

When the optical interferometric measurement is completed at the predetermined angle, the rotation of the first air spindle 70 is stopped to stop the rotation of the sample 10 in a step S8. Then, in a step S9, to perform the next measurement, the slide 73 of the first airslide 7 is slid to move the sample 10 in the X direction to a position corresponding to the next measurement angle. At the same time, the second air spindle 80 is actuated to revolve or turn the measurement optical axis L of the interference optical system 2 by a predetermined angle (a step S10), and the slide 83 of the second airslide 8 is slid to change the position of the interference optical system 2 in the Y direction (a step S11).

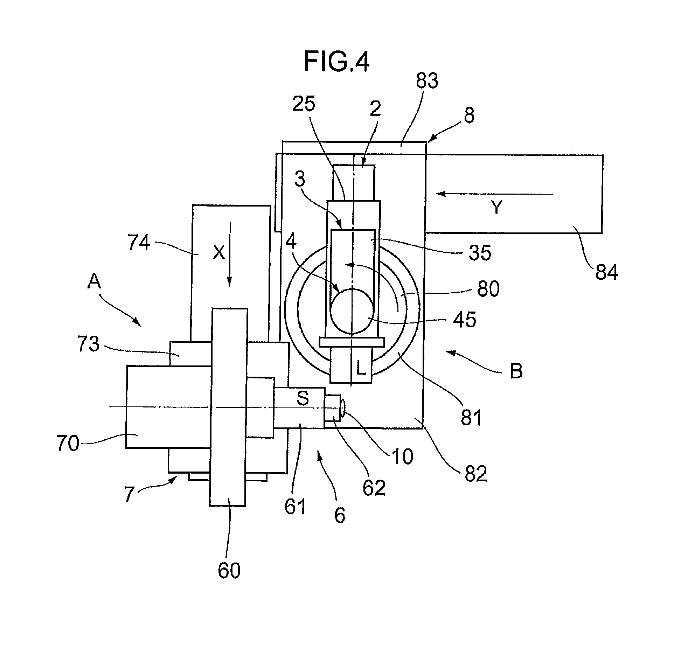

For example, to change the measurement angle between the test surface axis S and the measurement optical axis L from the directly opposing position shown in Fig. 3 to an orthogonal position shown in Fig. 4, the emission end of the interference optical system 2 moves to the front side (forward) in the X direction and to the right (backward) in the Y direction in the drawing as the second air spindle 80 revolves. The first airslide 7 moves the sample 10 forward in the X direction while the second airslide 8 moves the interference optical system 2 in the Y direction closer to the sample 10. Thus, the sample 10 and the interference optical system 2 are adjusted to keep a relative orientation at a predetermined angle and a predetermined distance apart from each other.

After the measurement angle is changed as described above, the rotation of the first air spindle 70 is started to rotate the sample 10 about the test surface axis S (return to the step S6) . The optical interferometric measurement is performed at a changed measurement angle in a like manner in the step S7.

The above-described measurement steps are repeated sequentially for a required number of times (the number of measurement angles required per measurement). Namely, the measurement is performed at every measurement angle set corresponding to the aspheric shape of the aspheric test surface 10a. Thereinafter, in a step S12, the first airslide 7 and the second airslide 8 are actuated to move the sample 10 back to the same position as that in which the sample 10 has been set in the step S3. The sample 10 measured is detached from the sample holder 63 (a step S13), and then the next sample 10 to be measured is attached thereto (return to the step S4). Hereinafter, the measurement angles corresponding to the new sample 10 are set in the same manner as the above.

The above measurement steps are repeated for the number of the samples 10. When all the samples 10 have been measured, the last sample 10 is detached from the sample holder 63 and then the power is turned off.

The analysis control device 50 analyzes and processes the image data obtained by the optical interferometric measurements at the sequentially-changed measurement angles. Each image data carries information about the shape of a ring-shaped measurement area (divided measurement area). Thus, the information about the entire shape of the aspheric test surface 10a is obtained.

As described above, the embodiment of the present invention is detailed. The present invention, however, is not limited to the above embodiment. Various changes and modifications are possible in the present invention and may be understood to be within the present invention.

For example, in the above embodiment, the first airslide 7 is placed in the X direction and the second airslide 8 is placed in the Y direction. Conversely, the first airslide 7 may be placed in the Y direction and the second airslide 8 may be placed in the X direction.

In the above described embodiment, the up-and-down actuator 87 is provided in the interferential optical mechanism B. The up-and-down actuator 87 may be provided in at least one of the sample holder mechanism A and the interferential optical mechanism B.

In the above embodiment, the aspheric test surface 10a has both the convex and concave portions. The shape of the aspheric test surface 10a is not limited to the above. The aspheric surface measuring apparatus of the present invention can be used for measurements of various aspheric test surfaces that are rotationally symmetric.

## Claims

1. An aspheric surface measuring apparatus (1) including a sample holding device (6, 7, 70) and an interferential optical device (2, 3, 4, 8, 80), the sample holding device holding a sample (10) having an aspheric test surface (10a), the interferential optical device having an interferential optical unit (2, 3, 4) for emitting measurement beams to the aspheric test surface and obtaining interference fringes caused by interference of the measurement beams reflected from the aspheric test surface and reference beams to perform optical interferometric measurement, the aspheric surface measuring apparatus measuring a shape of the aspheric test surface based on the interference fringes, the aspheric surface measuring apparatus comprising:
the sample holding device including:
a sample rotation mechanism (70) for rotating the sample about a test surface axis;
a first slide mechanism (7) for supporting and rectilinearly moving the sample rotation mechanism orthogonally or parallel to the test surface axis;
the interferential optical device including:
an optical unit revolution mechanism (80) for supporting and revolving the interferential optical unit to vary a measurement angle between a measurement optical axis of the interferential optical unit and the test surface axis;
a second slide mechanism (8) for supporting and rectilinearly moving the optical unit revolution mechanism orthogonal to a moving direction of the first slide mechanism; and
a controller (50) for controlling the sample rotation mechanism, the first slide mechanism, the optical unit revolution mechanism, and the second slide mechanism, wherein the optical interferometric measurement is performed while the sample is rotated and every time the measurement angle is varied sequentially under the control of the controller.

2. The aspheric surface measuring apparatus of claim 1, wherein the sample holding device and the interferential optical device are disposed in a housing (95) to prevent abrupt changes in temperature and humidity around the aspheric test surface.

3. The aspheric surface measuring apparatus of claim 1, wherein each of the first and second slide mechanisms is composed of an airslide (7, 8).

4. The aspheric surface measuring apparatus of claim 1, wherein each of the sample rotation mechanism and the optical unit revolution mechanism is composed of an air spindle (70, 80).

5. The aspheric surface measuring apparatus of claim 1, wherein the optical unit revolution mechanism having the interferential optical unit is mounted on a middle of a base portion (82) of the interferential optical device, and an end portion of the base portion is supported by a slide (83) of the second slide mechanism, and the other end portion is held slidably above a table (9) using an air bushing (86).

6. The aspheric surface measuring apparatus of claim 1, wherein an up-and-down mechanism (87) for adjusting positions of the test surface axis and the measurement optical axis in up-and-down direction is provided to at least one of the sample holding device and the interferential optical device.

7. The aspheric surface measuring apparatus of claim 1, wherein the interferential optical unit is provided with a first imaging section (3) for imaging the interference fringes using a one-dimensional image sensor (32) and a second imaging section (4) for imaging the interference fringes using a two-dimensional image sensor (42).
